# EUROPEAN PATENT APPLICATION

(11) **EP 3 731 067 A1**
(43) Date of publication of application: **28.10.2020**
(21) Application number: 18891558.1
(22) Date of filing: 10.10.2018
(51) Int. Cl.: G06F 3/01, G06F 3/16, H04M 11/00

(54) **INFORMATION PROCESSING DEVICE, INFORMATION PROCESSING METHOD, AND PROGRAM**

(30) Priority: 18.12.2017 JP 2017242169
(71) Applicant: Sony Corporation, 108-0075 Tokyo (JP)
(72) Inventor: NAGASAKA, Hideo, Tokyo 140-0002 (JP); GOTO, Tsuguyo, Tokyo 140-0002 (JP); DOYAMA, Yusuke, Tokyo 140-0002 (JP); AOYAMA, Ryu, Tokyo 140-0002 (JP); HIROSE, Yoji, Tokyo 140-0002 (JP)
(74) Representative: D Young & Co LLP
(86) International application number: PCT/JP2018/037634
(87) International publication number: WO 2019/123785

(57) **Abstract**

A user operates content more intuitively.

Provided is an information processing apparatus including an output control unit that controls provision of a plurality of content lists corresponding to a context to a user on the basis of the recognized context, in which the output control unit controls switching of the content lists on the basis of an equipment operation or a gesture by the user. Moreover, provided is an information processing method including controlling, by a processor, provision of a plurality of content lists corresponding to a context to a user on the basis of the recognized context, in which the controlling further includes controlling switching of the content lists on the basis of an equipment operation or a gesture by the user.

## Description

### TECHNICAL FIELD

The present disclosure relates to an information processing apparatus, an information processing method, and a program.

### BACKGROUND

In recent years, various apparatuses that provide content and functions to a user have become widespread. Moreover, a technique for improving convenience of the user using the apparatuses as described above has been developed. For example, Patent Document 1 discloses an information processing apparatus that executes different types of processing according to a state of the apparatus with respect to a same user operation.

### CITATION LIST

### PATENT DOCUMENT

Patent Document 1: Japanese Patent Application Laid-Open No. 2017-147652

### SUMMARY OF THE INVENTION

### PROBLEM TO BE SOLVED BY THE INVENTION

However, in the case of the information processing apparatus disclosed in Patent Document 1, in order for the user to cause the apparatus to execute processing as intended by the user, it is required to correctly input an operation pattern according to a state of the apparatus.

Consequently, the present disclosure proposes a new and improved information processing apparatus, information processing method, and program that enable a user to operate content more intuitively.

### SOLUTIONS TO PROBLEM

According to the present disclosure, there is provided an information processing apparatus including an output control unit that controls provision of a plurality of content lists corresponding to a context to a user on the basis of the recognized context, in which the output control unit controls switching of the content lists on the basis of an equipment operation or a gesture by the user.

Moreover, according to the present disclosure, there is provided an information processing method including controlling, by a processor, provision of a plurality of content lists corresponding to a context to a user on the basis of the recognized context, in which the controlling includes controlling switching of the content lists on the basis of an equipment operation or a gesture by the user.

Moreover, according to the present disclosure, there is provided a program configured to cause a computer to function as an information processing apparatus, in which the information processing apparatus includes an output control unit that controls provision of a plurality of content lists corresponding to a context to a user on the basis of the recognized context, and the output control unit controls switching of the content lists on the basis of an equipment operation or a gesture by the user.

### EFFECTS OF THE INVENTION

As described above, according to the present disclosure, it is possible for a user to operate the content more intuitively.

Note that the above-described effect is not necessarily limitative, and any of the effects described in the present specification or other effects that can be grasped from the present specification may be exerted together with or in place of the above-described effect.

### BRIEF DESCRIPTION OF DRAWINGS

Fig. 1 is a view showing a basic structure of an information processing terminal according to one embodiment of the present disclosure.
Fig. 2 is a view showing how the information processing terminal of an open-ear type according to the same embodiment outputs sound waves to an ear of a user.
Fig. 3 is a block diagram showing a configuration example of an information processing system according to the same embodiment.
Fig. 4 is a block diagram showing a functional configuration example of the information processing terminal according to the same embodiment.
Fig. 5 is a block diagram showing a functional configuration example of an information processing server according to the same embodiment.
Fig. 6 is a diagram for describing reproduction of content according to contexts according to the same embodiment.
Fig. 7 is a diagram showing an example of content lists corresponding to the context according to the same embodiment.
Fig. 8 is a diagram showing an example of a plurality of the content lists according to the same embodiment.
Fig. 9 is a diagram showing an example related to a structure and presentation control of the content list according to the same embodiment.
Fig. 10 is a diagram showing an example of the content lists related to function commands according to the same embodiment.
Fig. 11 is a flowchart showing a flow of control by the information processing server according to the same embodiment.

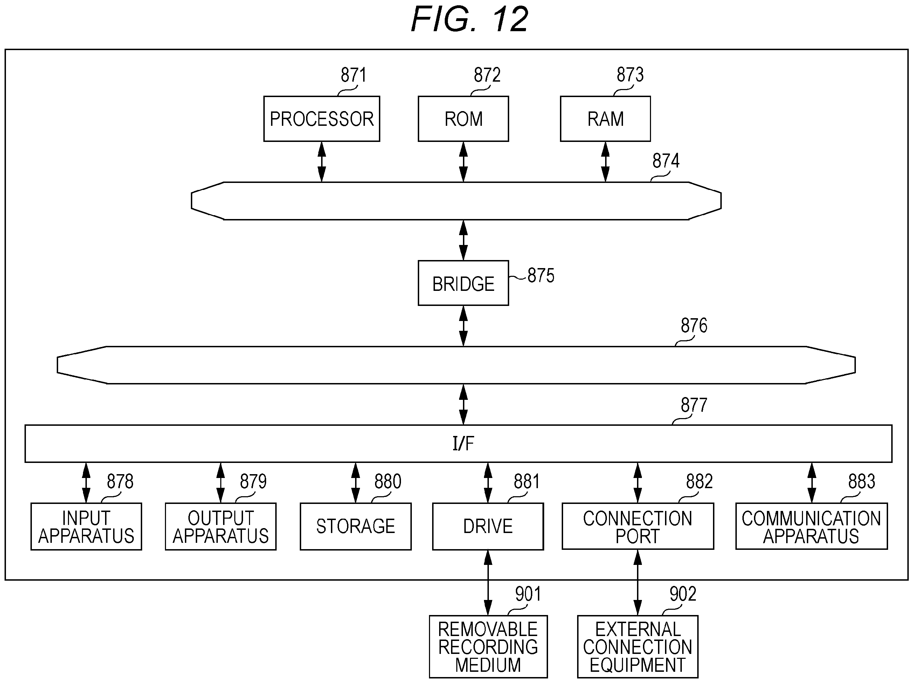

Fig. 12 is a diagram showing a hardware configuration example according to one embodiment of the present disclosure.

### MODE FOR CARRYING OUT THE INVENTION

Hereinafter, preferred embodiments of the present disclosure will be described in detail with reference to the accompanying drawings. Note that in the present specification and the drawings, as to a component having the substantially the same functional configuration, a duplication description is omitted by giving the same reference sign.

Note that the description will be given in the following order.
1. Embodiment
   1.1. Overview
   1.2. Example of information processing terminal 10
   1.3. System configuration example
   1.4. Functional configuration example of information processing terminal 10
   1.5. Functional configuration example of information processing server 20
   1.6. Presentation control over content list
   1.7. Flow of control
2. Hardware configuration example
3. Conclusion

### <1. Embodiment>

### <<1.1. Overview>>

First, an overview of one embodiment of the present disclosure will be described. As described above, in recent years, various apparatuses that each provide content and functions to a user have become widespread. Apparatuses as described above include, for example, terminals and the like that provide content such as audio programs and the like to the user.

Moreover, many wearable apparatuses used by being worn on a body of a user have been developed. As the wearable apparatuses, there are cited, for example, a head-mounted display that is mounted on a head of a user and provides visual information and audio information, and a glasses-type apparatus. In the case of a head-mounted display or the like, the user can execute an operation of the apparatus in detail while visually confirming information displayed on a user interface.

On the other hand, in recent years, terminals each having no display apparatus, such as a hearable apparatus worn on an ear of a user, have become widespread. In the case of the hearable apparatus, the user can operate the apparatus, for example, by gestures such as equipment operations (button pressing, touch operation, etc.), utterance, nodding and shaking a head, and the like.

However, a number of buttons disposed in the hearable apparatus and operation patterns that can be detected are limited, and a number of operations assigned to gestures is also limited. Moreover, while it is assumed that operation control based on the utterance can be performed relatively flexibly, for example, in a public place or the like, the operation based on the utterance is often difficult. In this case, it is common for the user to perform, for example, an operation of an audio program or the like, using a terminal such as a smartphone that cooperates with the hearable apparatus, and improvement in convenience has been demanded.

A technical idea according to one embodiment of the present disclosure has been conceived by paying attention to the above-described points, and enables a more intuitive content operation by a user to be realized. Therefore, an information processing apparatus according to one embodiment of the present disclosure has a function of controlling provision of a plurality of content lists with respect to a context to the user on the basis of the recognized context. Moreover, it is one feature that the information processing apparatus according to the present embodiment controls switching and selection of the above-described content lists on the basis of an utterance, a gesture, an equipment operation, and the like of the user.

With the above-described function that the information processing apparatus according to the present embodiment has, it is possible to control reproduction and execution of the content by a more intuitive and simpler operation, and it is possible to further enhance convenience of the apparatus.

Hereinafter, features that the information processing apparatus according to the present embodiment has, and effects achieved by the features will be described in detail. Note that while in the following, a case where an information processing terminal 10 that provides content is a hearable apparatus will be described as a main example, the information processing terminal 10 according to the present embodiment is not limited to such an example. The information processing terminal 10 according to the present embodiment can be various apparatuses that each provide content to the user.

### <<1.2. Example of information processing terminal 10»

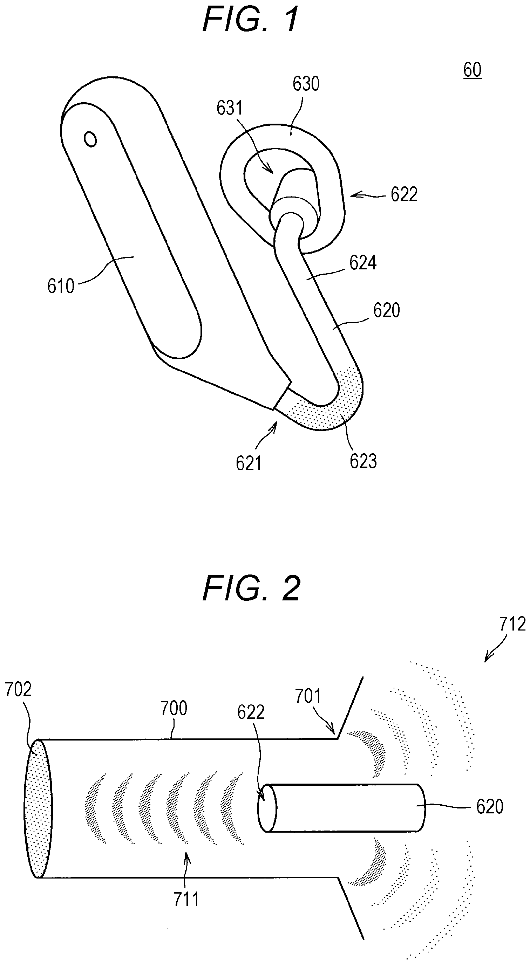

First, an example of the information processing terminal 10 according to the present embodiment will be described. The information processing terminal 10 according to the present embodiment is an information processing apparatus that provides content to the user on the basis of control by an information processing server 20. Fig. 1 is a view showing a basic structure of the information processing terminal 10 according to the present embodiment. Note that Fig. 1 shows one example of the basic structure in a case where the information processing terminal 10 according to the present embodiment is a hearable apparatus.

Referring to Fig. 1, an information processing terminal 10 according to the present embodiment includes a sound generation portion 610 that generates sound, a sound guide portion 620 that takes in the sound emitted from the sound generation portion 610 from one end 621, and a holding portion 630 that holds the sound guide portion 620 in a vicinity of another end 622. The sound guide portion 620 may include, for example, a hollow tube having an inner diameter of 1 mm to 5 mm, and both ends thereof may be open ends. Moreover, the one end 621 of the sound guide portion 620 is a sound input hole for the sound generated from the sound generation portion 610, and the other end 622 functions as a sound output hole. Accordingly, attaching the one end 621 to the sound generation portion 610 brings the sound guide portion 620 into a one-side open state.

Moreover, the holding portion 630 engages with a vicinity of an entrance of an external auditory meatus (e.g., intertragic incisure), and supports the sound guide portion 620 in a vicinity of the other end 622 so that the sound output hole at the other end 622 of the sound guide portion 620 faces a depth side of the external auditory meatus. An outer diameter of the sound guide portion 620 at least in the vicinity of the other end 622 is formed to be much smaller than an inner diameter of an ear hole. Accordingly, even in a state where the other end 622 of the sound guide portion 620 is held in the vicinity of the entrance of the external auditory meatus by the holding portion 630, the ear hole of the user is not closed. That is, the ear hole is open. The information processing terminal 10 is different from a general earphone, and can be described as an "open-ear type".

Moreover, the holding portion 630 also includes an opening 631 that opens the external auditory meatus entrance (ear hole) to an outside world even in the state holding the sound guide portion 620. In the example shown in Fig. 1, the holding portion 630 is a structure body having a ring shape, and is joined to the vicinity of the other end 622 of the sound guide portion 620 at a part of an inside, so that all of the other portions of the ring-shaped structure body are the opening 631. Note that the holding portion 630 is not limited to the ring-shaped structure, and may have any shape that can support the other end 622 of the sound guide portion 620 as long as the holding portion 630 has a hollow structure.

Upon taking the sound emitted by the sound generation portion 610 into the tube from the one end 621 of the sound guide portion 620 having the tubular shape, the sound guide portion 620 propagates air vibration, and gives off the air vibration from the other end 622 held in the vicinity of the external auditory meatus entrance by the holding portion 630 toward the external auditory meatus, and transmits it to an eardrum.

As described above, the holding portion 630 that holds the vicinity of the other end 622 of the sound guide portion 620 includes the opening 631 that opens the entrance (ear hole) of the external auditory meatus to the outside world. Accordingly, even in a state where the information processing terminal 10 is worn, the ear hole of the user is not closed. The user can sufficiently listen to ambient sound via the opening 631 while wearing the information processing terminal 10 and listening to the sound output from the sound generation portion 610.

Moreover, while in the information processing terminal 10 according to the present embodiment, the ear hole is open, it is possible to prevent the generated sound (reproduced sound) from the sound generation portion 610 from leaking to the outside. This is because the other end 622 of the sound guide portion 620 is attached so as to face a depth in the vicinity of the entrance of the external auditory meatus, and the air vibration of the generated sound is radiated near the eardrum, so that sufficient sound quality can be obtained even if the output is reduced

Moreover, directivity of the air vibration radiated from the other end 622 of the sound guide portion 620 also contributes to the prevention of sound leakage. Fig. 2 shows how the information processing terminal 10 of the open-ear type outputs sound waves to the ear of the user. As shown in Fig. 2, the air vibration is radiated from the other end 622 of the sound guide portion 620 toward an inside of the external auditory meatus. An external auditory meatus 700 is a hole that starts at an external auditory meatus entrance 701 and ends inside an eardrum 702, and generally has a length of approximately 25 millimeters to 30 millimeters. The external auditory meatus 700 is a cylindrical closed space. Therefore, the air vibration radiated from the other end 622 of the sound guide portion 620 toward the depth of the external auditory meatus 700 propagates up to the eardrum 702 with directivity as indicated by reference sign 711. Moreover, since the air vibration increases a sound pressure inside the external auditory meatus 700, sensitivity (gain), particularly, in a lower frequency band is improved. On the other hand, the outside of the external auditory meatus 700, that is, an outside world is an open space. Therefore, the air vibration radiated from the other end 622 of the sound guide portion 620 to the outside of the external auditory meatus 700 has no directivity in the outside world and rapidly attenuates, as indicated by reference sign 712.

Description will be given again with reference to Fig. 1. The sound guide portion 620 having a tubular shape has a bent shape in a middle portion, the bent shape being folded back from a back side to a front side of a pinna. This bent portion is a pinch portion 623 having an opening/closing structure, and can pinch an earlobe by generating a pinch force.

Moreover, the sound guide portion 620 further has a deformable portion 624 between the other end 622 disposed in the vicinity of the entrance of the external auditory meatus and the pinch portion 623, which is bent. The deformable portion 624 has a function of deforming when an excessive external force acts to prevent the other end 622 of the sound guide portion 620 from entering the depth of the external auditory meatus more than necessary.

### <<1.3. System configuration example>>

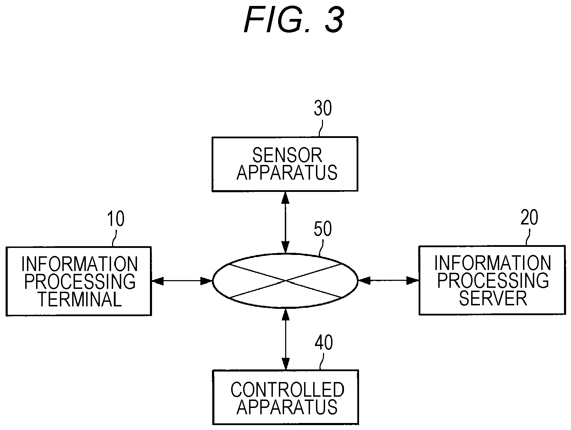

Next, a configuration example of an information processing system according to the one embodiment of the present disclosure will be described. Fig. 3 is a block diagram showing a configuration example of the information processing system according to the present embodiment. Referring to Fig. 3, the information processing system according to the present embodiment includes the information processing terminal 10, the information processing server 20, a sensor apparatus 30, and a controlled apparatus 40. Moreover, the above-described respective configurations are connected via a network 50 so that information communication can be mutually performed.

### (Information processing terminal 10)

The information processing terminal 10 according to the present embodiment is an information processing apparatus that provides the content lists to the user on the basis of control by the information processing server 20. As described with reference to Figs. 1 and 2, the information processing terminal 10 according to the present embodiment may be a hearable apparatus. On the other hand, the information processing terminal 10 according to the present embodiment is not limited to such an example. The information processing terminal 10 according to the present embodiment may be, for example, a wearable apparatus, a stationary type, or an autonomous mobile type dedicated apparatus. The information processing terminal 10 according to the present embodiment may be various apparatuses that each provide the content to the user.

Moreover, the information processing terminal 10 according to the present embodiment has a function of collecting sensor information related to the user and surroundings. The sensor information collected by the information processing terminal 10 is used for recognition of a context by the information processing server 20.

### (Information processing server 20)

The information processing server 20 according to the present embodiment is an information processing apparatus that controls the provision of the plurality of content lists corresponding the context by the information processing terminal 10 on the basis of the recognized context. At this time, it is one feature that the information processing server 20 according to the present embodiment controls switching and selection of the above-described content lists on the basis of an utterance, a gesture, an equipment operation, and the like of the user. Details of the functions that the information processing server 20 according to the present embodiment has will be separately described later.

### (Sensor apparatus 30)

The sensor apparatus 30 according to the present embodiment is an information processing apparatus that collects sensor information related to the user and the surroundings. The sensor information collected by the sensor apparatus 30 is used for the recognition of the context by the information processing server 20. The sensor apparatus 30 according to the present embodiment can be, for example, a mobile phone, a smartphone, a tablet, a wearable apparatus, a home electric appliance, or the like.

### (Controlled apparatus 40)

The controlled apparatus 40 according to the present embodiment is an apparatus that executes various functions on the basis of the control by the information processing server 20. The controlled apparatus 40 according to the present embodiment may be, for example, a home electric appliance such as a lighting apparatus, an air conditioner, or a television apparatus. The information processing server 20 can cause the controlled apparatus 40 to execute various functions on the basis of the utterance, gesture, equipment operation of the user, and the like with respect to the content lists. In this manner, the content lists according to the present embodiment include, in addition to an audio program and the like, function commands that define functions to be executed by the controlled apparatus 40. Details of the content lists according to the present embodiment will be separately described later.

### (Network 50)

The network 50 has a function of connecting each of the configurations included in the information processing system. The network 50 may include a public line network such as the internet, a telephone line network, a satellite communication network, or the like, and various local area networks (LANs) including Ethernet (registered trademark), wide area networks (WANs), and the like. Moreover, the network 50 may include a dedicated line network such as an internet protocol-virtual private network (IP-VPN) or the like. Further, the network 50 may include a wireless communication network such as Wi-Fi (registered trademark), Bluetooth (registered trademark) or the like.

Heretofore, the configuration example of the information processing system according to the present embodiment has been described. Note that the system configuration described with reference to Fig. 3 is merely an example, and the configuration of the information processing system according to the present embodiment is not limited to such an example. For example, the information processing system according to the present embodiment does not necessarily need to include the sensor apparatus 30 and the controlled apparatus 40. Moreover, the functions that the information processing terminal 10 and the information processing server 20 according to the present embodiment have may be realized by a single apparatus. The configuration of the information processing system according to the present embodiment can be flexibly modified in accordance with specifications and operations.

### <<1.4. Functional configuration example of information processing terminal 10>>

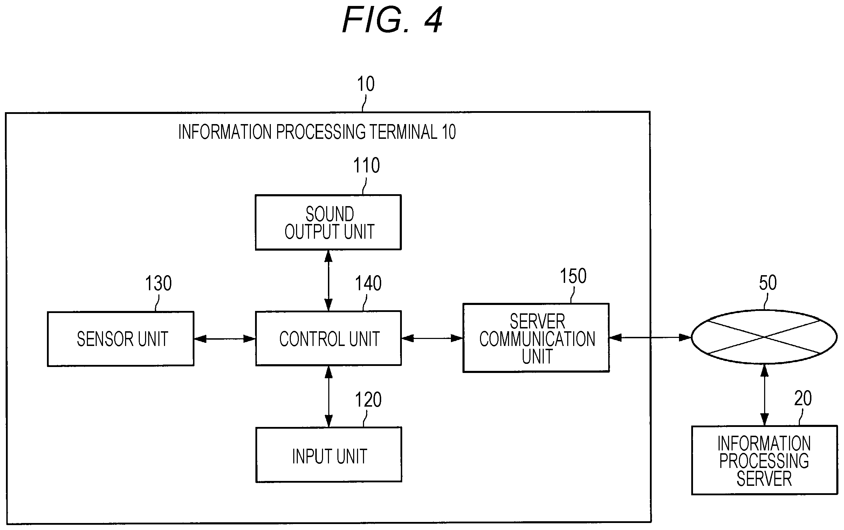

Next, a functional configuration example of the information processing terminal 10 according to the present embodiment will be described. Fig. 4 is a block diagram showing a functional configuration example of the information processing terminal 10 according to the present embodiment. Referring to Fig. 4, the information processing terminal 10 according to the present embodiment includes an audio output unit 110, an input unit 120, a sensor unit 130, a control unit 140, and a server communication unit 150.

### (Audio output unit 110)

The audio output unit 110 according to the present embodiment has a function of outputting various sounds including a voice utterance. The audio output unit 110 according to the present embodiment can be said to be a provision unit that provides the user with the content lists on the basis of the control by the information processing server 20. Therefore, the audio output unit 110 according to the present embodiment includes an audio output apparatus such as a speaker, an amplifier or the like.

### (Input unit 120)

The input unit 120 according to the present embodiment has a function of detecting various equipment operations by the user. The above-mentioned equipment operation may include, for example, button pressing, various touch operations, and the like. Moreover, the input unit 120 has a function of collecting sound information such as an utterance of the user and ambient sound generated around the information processing terminal 10. The sound information collected by the input unit 120 is used for audio recognition by the information processing server 20, recognition of a surrounding environment, and the like. The input unit 120 according to the present embodiment includes a microphone configured to collect the sound information.

### (Sensor unit 130)

The sensor unit 130 according to the present embodiment has a function of collecting various types of sensor information regarding the surrounding environment, and a behavior and a state of the user. The sensor information collected by the sensor unit 130 is used for the recognition of the context by the information processing server 20. The sensor unit 130 includes an acceleration sensor, a gyro sensor, a geomagnetic sensor, a vibration sensor, a global navigation satellite system (GNSS) signal receiving apparatus, an imaging element, and the like.

### (Control unit 140)

The control unit 140 according to the present embodiment has a function of controlling each of the configurations included in the information processing terminal 10. The control unit 140 controls, for example, activation and stop of each of the configurations. Moreover, the control unit 140 inputs a control signal generated by the information processing server 20 to the audio output unit 110. Moreover, the control unit 140 according to the present embodiment may have a function equivalent to that of an output control unit 220 of the information processing server 20, which will be described later.

### (Server communication unit 150)

The server communication unit 150 according to the present embodiment has a function of performing information communication with the information processing server 20 via the network 50. Specifically, the server communication unit 150 transmits, to the information processing server 20, the sound information collected by the input unit 120 and the sensor information collected by the sensor unit 130. Moreover, the server communication unit 150 receives, from the information processing server 20, the content list, a control signal related to output of the content included in the relevant content list, and the like.

Heretofore, the functional configuration example of the information processing terminal 10 according to the present embodiment has been described. Note that the configuration described above with reference to Fig. 4 is merely an example, and the functional configuration of the information processing terminal 10 according to the present embodiment is not limited to the example. For example, as described above, the control unit 140 according to the present embodiment may have a function equivalent to the output control unit 220 of the information processing server 20. The functional configuration of the information processing terminal 10 according to the present embodiment can be flexibly modified in accordance with specifications and operations.

### <<1.5. Functional configuration example of information processing server 20>>

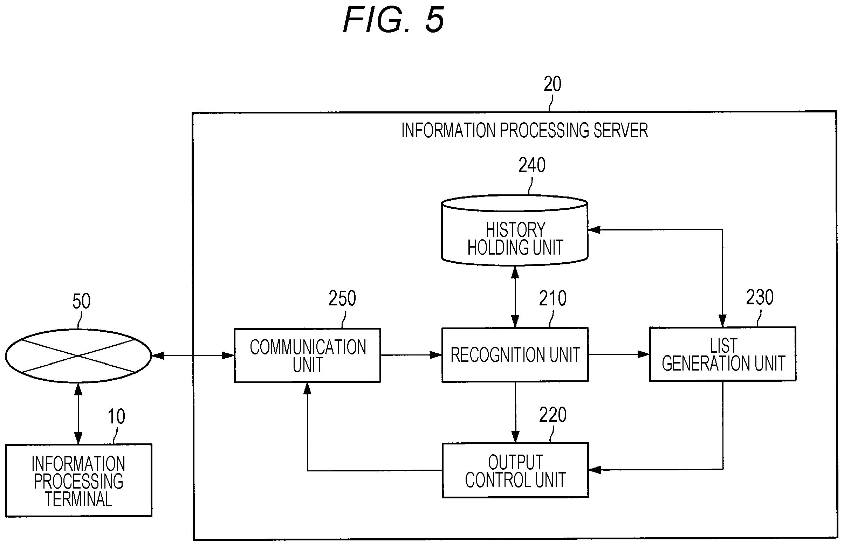

Next, a functional configuration example of the information processing server 20 according to the present embodiment will be described. Fig. 5 is a block diagram showing a functional configuration example of the information processing server 20 according to the present embodiment. Referring to Fig. 5, the information processing server 20 according to the present embodiment includes a recognition unit 210, the output control unit 220, a list generation unit 230, a history holding unit 240, and a communication unit 250.

### (Recognition unit 210)

The recognition unit 210 according to the present embodiment has a function of recognizing the context on the basis of the sensor information collected by the information processing terminal 10 and the sensor apparatus 30. The context according to the present embodiment can also be said to be the state of the user or the environment. The context according to the present embodiment may be, for example, a combination of elements related to states such as "early morning", "home", "before going to work", "sunny", " emotion of the user: calm", and the like. The output control unit 220 according to the present embodiment can provide the content that matches the state of the user or the environment by controlling the provision of the content lists according to the context as described above. Note that the recognition unit 210 can recognize various contexts on the basis of collected images, audio, acceleration information, angular velocity information, position information, usage information of home electric appliances, and the like.

Moreover, the recognition unit 210 according to the present embodiment has a function of performing audio recognition processing on the basis of the utterances of the user collected by the information processing terminal 10 and the sensor apparatus 30. Furthermore, the recognition unit 210 according to the present embodiment has a function of recognizing the gesture of the user on the basis of the sensor information collected by the information processing terminal 10 and the sensor apparatus 30. The utterance or the gesture of the user recognized by the recognition unit 210 is used for controlling the content lists by the output control unit 220.

### (Output control unit 220)

The output control unit 220 according to the present embodiment has a function of controlling the provision of the plurality of content lists corresponding to the context to the user on the basis of the context recognized by the recognition unit 210. At this time, it is one feature that the output control unit 220 according to the present embodiment controls the provision of the above-described content lists on the basis of the utterance or the gesture, the equipment operation, and the like of the user recognized by the recognition unit 210. Details of the functions that the output control unit 220 according to the present embodiment has will be separately described later.

### (List generation unit 230)

The list generation unit 230 according to the present embodiment has a function of generating the content lists corresponding to the context and controlling priority. The list generation unit 230 according to the present embodiment may generate the content lists or change the priority on the basis of, for example, a preference or an action history of the user or the like. The generation of the content list by the list generation unit 230 according to the present embodiment will be described separately in detail.

### (History holding unit 240)

The history holding unit 240 according to the present embodiment holds history information related to an operation history or feedback of the user with respect to the content lists. Moreover, the history holding unit 240 according to the present embodiment holds the operation history of the user (particularly, an execution history of functions) with respect to the controlled apparatus 40.

### (Communication unit 250)

The communication unit 250 according to the present embodiment performs information communication with the information processing terminal 10, the sensor apparatus 30, and the controlled apparatus 40 via the network 50. For example, the communication unit 250 receives the sound information and the sensor information from the information processing terminal 10, and transmits a control signal related to the content lists to the information processing terminal 10.

Heretofore, the functional configuration example of the information processing server 20 according to the present embodiment has been described. Note that the functional configuration described above with reference to Fig. 5 is merely an example, and the functional configuration of the information processing server 20 according to the present embodiment is not limited to the example. For example, the information processing server 20 does not necessarily need to include all of the configurations shown in Fig. 5. The recognition unit 210, the list generation unit 230, and the history holding unit 240 can be included in another apparatus different from the information processing server 20. The functional configuration of the information processing server 20 according to the present embodiment can be flexibly modified in accordance with specifications and operations.

### <<1.6. Presentation control over content list>>

Next, presentation control over the content list by the output control unit 220 according to the present embodiment will be described in detail. As described above, in recent years, various apparatuses that each provide content to a user have become widespread, and for example, as in a hearable apparatus, in an apparatus having no display apparatus or a limited size of the display apparatus, a case is assumed where it is difficult to operate the content through visual information.

On the other hand, while in the hearable apparatus, the equipment operation, the operation by the utterance or the gesture, etc. are also enabled, in the operation by a button or the gesture, there are restrictions on assigned functions (e.g., reproduction, stop, transition to a next content, etc.), and further, the operation by utterance may be difficult, depending on a situation such as a place or a time zone.

Consequently, as a method for improving convenience of the user related to the content operation against the restrictions as described above, for example, it is also assumed that the content corresponding to the context is automatically reproduced by the information processing terminal 10 on the basis of the recognized context. In this method, by automatically reproducing content that the user tends to reproduce frequently in a certain context, it is possible to provide the content that matches the preference of the relevant user without any operation by the user.

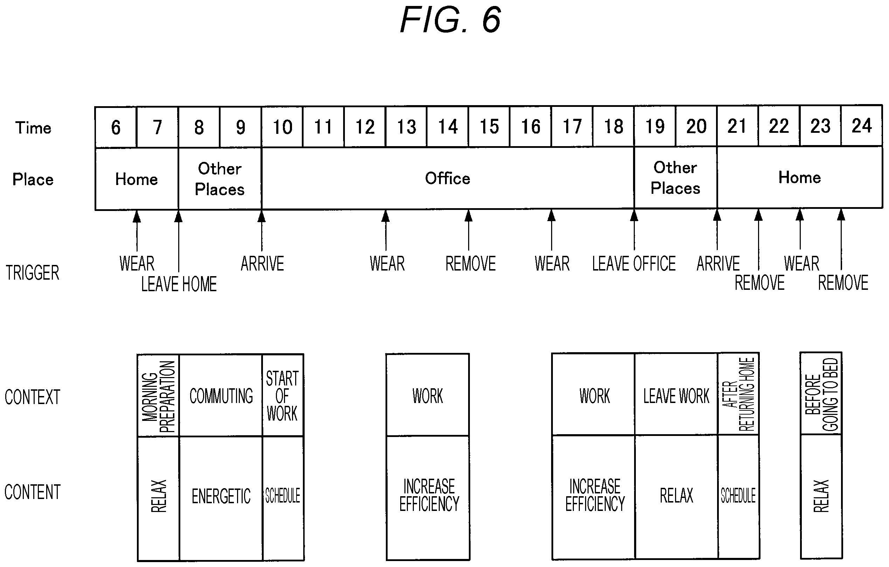

Fig. 6 is a diagram for describing the reproduction of the content according to the contexts. Fig. 6 shows an example of locations of the user in one day, the triggers related to the content reproduction, the contexts, and the content automatically reproduced in accordance with the context.

For example, by using, as a trigger, wearing of the information processing terminal 10 at home in early morning, the information processing server 20 may cause the information processing terminal 10 to automatically reproduce a content type "relax (relaxable music piece or the like)" corresponding to a recognized context "morning preparation".

Moreover, for example, by using departure of the user from home as a trigger, the information processing server 20 may cause the information processing terminal 10 to automatically reproduce a content type "energetic (music piece that gives energy or the like)" corresponding to a recognized context "commuting".

Moreover, for example, by using arrival of the user at a workplace as a trigger, the information processing server 20 may cause the information processing terminal 10 to automatically reproduce a content type "schedule (reading out a registered schedule, or the like)" corresponding to a recognized context "start of work". In this manner, the content according to the present embodiment includes various audio programs related to music pieces, schedule, news, reading, learning, and the like.

Similarly, the information processing server 20 can cause the information processing terminal 10 to automatically reproduce the content corresponding to the relevant context on the basis of various triggers and various contexts such as work (working), leaving work, after returning home, before going to bed, and the like. Note that the recognition unit 210 of the information processing server 20 can recognize the above-described triggers and contexts, for example, on the basis of the acceleration information and the angular velocity information collected by the information processing terminal 10, reception intensity of the GNSS signal, information of a Wi-Fi access point to be connected, and the like.

On the other hand, as described above, when the automatic reproduction of a single content or a content type corresponding to a context is performed, in some situations, a case may be assumed where content that does not meet the intention of the user is reproduced. For example, even when the recognition of the triggers and the contexts can be correctly recognized, a new context that the information processing server 20 cannot grasp is generated every day, and the preference of the user can change.

In this case, after all, the user has to perform an operation of reselecting content by himself/herself, and there is a high possibility that it will take double labor and time. Moreover, as described above, since there are restrictions on the user interface that can be provided by the hearable apparatus or the like, it is predicted that reselection of the content by an equipment operation or a gesture will be complicated. Therefore, in a case where a simpler and faster operation is desired, only the operation by utterance remains as an option, but as described above, the operation by utterance may be difficult, depending on the environment such as a place, a time zone or the like.

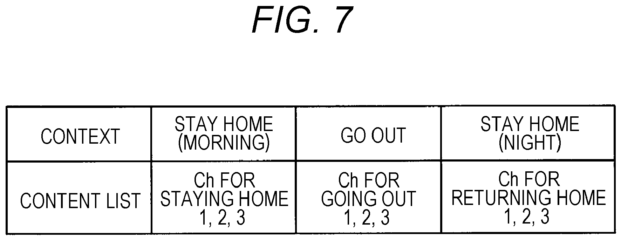

Consequently, it is one feature that the information processing server 20 according to the present embodiment presents a plurality of content lists corresponding to the recognized context to the user, and controls switching or selection of the content lists on the basis of an equipment operation or a gesture or the like of the user. Fig. 7 is a diagram showing an example of the content lists corresponding to the contexts according to the present embodiment. Fig. 7 shows an example of the plurality of content lists (hereinafter, also referred to as channels) corresponding to each of the contexts "stay home (morning)", "go out", and "stay home (night)". For example, the context "stay home (morning)", the context "go out", and the context "stay home (night)" are associated with "channels 1 to 3" for staying home, "channels 1 to 3 for going out", and "channels 1 to 3 for returning home", respectively.

At this time, the output control unit 220 according to the present embodiment presents, to the user, the plurality of content lists according to the context recognized by the recognition unit 210, which enables the user to be supported so that the user can intuitively and easily select the content according to the preference.

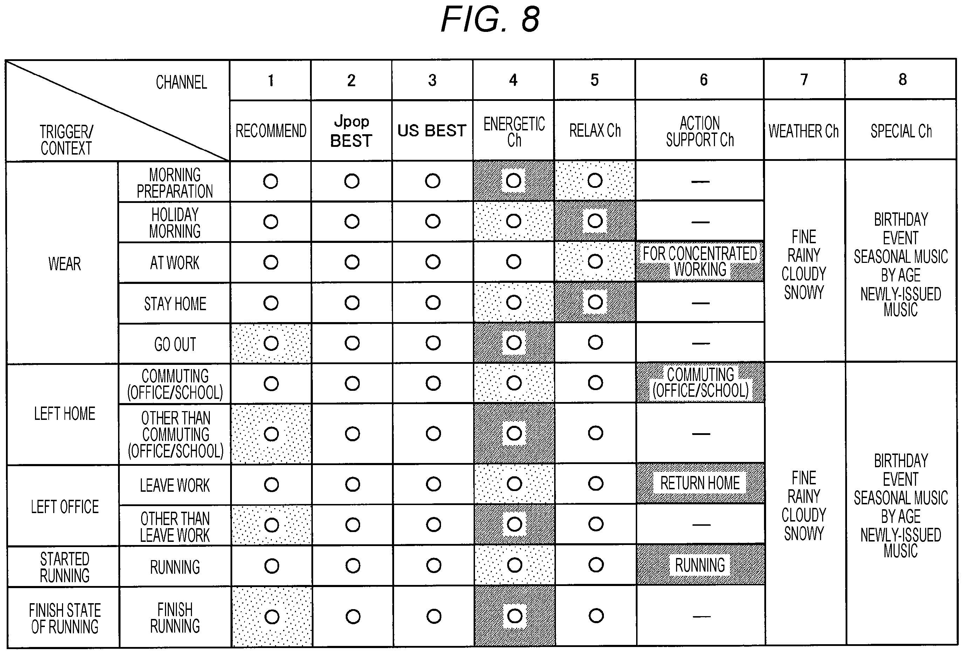

Fig. 8 is a diagram showing an example of the plurality of content lists according to the present embodiment. Fig. 8 shows an example in which the output control unit 220 causes the information processing terminal 10 to present the plurality of content lists related to the audio program on the basis of the recognized trigger and context.

Note that the plurality of content lists according to the present embodiment may be presented in a priority order according to the preference or the like of the user. For example, in a trigger "wear" and the context "morning preparation", the output control unit 220 may give first priority to an "energetic channel (content list including a plurality of music pieces that energizes the user)" and second priority to a "relax channel (content list including a plurality of relaxable music pieces))", and may cause the information processing terminal 10 to present the foregoing in that order.

On the other hand, the output control unit 220 may give first priority to an "action support channel (e.g., content list including a plurality of audio programs related to reading out a schedule, self-development, learning, and the like)", and second priority to the "energetic channel" in a trigger "left home" and a context "commuting (office/school), and may cause the information processing terminal 10 to present the foregoing in that order. Note that in the example shown in Fig. 8, the first priority is indicated by high density dots, and the second priority is indicated by low density dots.

In this manner, the output control unit 220 according to the present embodiment presents the plurality of content lists according to the context to the user, which enables the user to easily select the content according to the preference.

Note that the content list according to the present embodiment may have, for example, a hierarchical structure including a plurality of content groups. For example, the content list has a plurality of content groups such as a large group, a small group, and the like. In this case, a genre such as "rock" or the like may correspond to the large group, and a category such as "artist J", "artist K" or the like may correspond to the small group.

Moreover, each of the above-described content groups may be configured of a plurality of content. According to the above-described example, for example, music pieces of each artist are arranged at a more specific position of the small group.

At this time, the user can intuitively and easily switch or select the content lists or the content, for example, by performing a simple equipment operation or gesture to a content list name, a content group name, and a content name that are read out by voice.

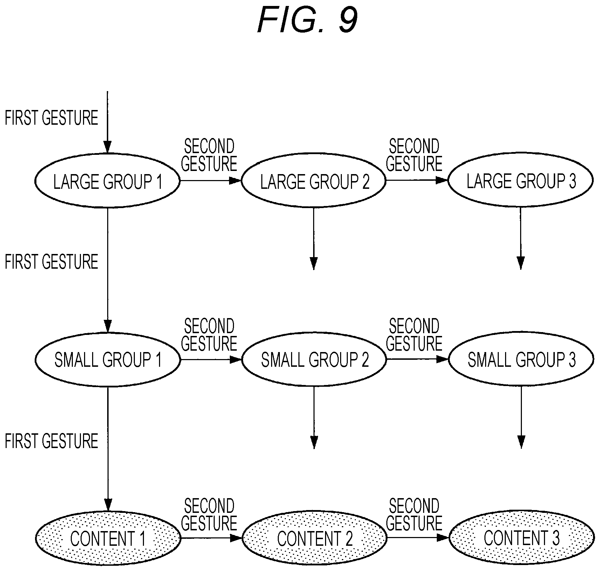

Fig. 9 is a diagram showing an example of a structure of the content list and the presentation control according to the present embodiment. The output control unit 220 acquires a plurality of content lists corresponding to the relevant context, for example, on the basis of the context recognized by the recognition unit 210, and causes the information processing terminal 10 to read out the list names. At this time, the output control unit 220 controls selection of the content list, for example, on the basis of recognition of a first gesture of the user, and causes the information processing terminal 10 to sequentially read out the content group names included in the relevant content. Here, the above-described first gesture may be, for example, a motion such as nodding or the like. Note that the gesture according to the present embodiment widely includes a specific motion of the user using a part or the whole of a body. The recognition unit 210 according to the present embodiment can sense the specific motion on the basis of various types of sensor information including an image, and can recognize the specific motion as the gesture.

On the other hand, in a case where a second gesture by the user is recognized, the output control unit 220 controls switching to the next content group or content belonging to the same hierarchy. For example, in a case where the second gesture of the user is recognized during the name reading out of a "small group 1", the output control unit 220 transits to name reading-out control of a "small group 2". Moreover, for example, in a case where the second gesture of the user is recognized during the name reading out or reproduction of a "content 1", the output control unit 220 transits to the name reading out or reproduction control of a "content 2". Note that the second gesture may be, for example, a motion such as shaking a head or the like.

In this manner, with the functions of the output control unit 220 according to the present embodiment, the content groups and the content can be sequentially presented to the user in accordance with the hierarchical structure of the content list, and an instruction such as switching, presentation or the like can be obtained. With such functions, the user can intuitively and easily perform a selection operation related to the content that matches his/her preference by using, for example, the simple gesture as described above, and enjoy more flexible and highly-convenient content provision.

Note that, while in the above description with reference to Fig. 9, the case where switching or selection is performed using the gesture has been described as an example, the switching or the selection of the content lists, the content groups, and the content according to the present embodiment is not limited to such an example. The user can perform switching or selection, for example, by pressing a button, performing a touch operation or the like.

Moreover, for example, in a case where the equipment operation or the gesture by the user is not detected for a predetermined time or longer, the output control unit 220 may automatically select the content group or the content being read out,.

Moreover, the content according to the present embodiment is not limited to a music piece as described above. The content according to the present embodiment includes, for example, various audio programs related to news, schedule, reading, learning, and the like.

Moreover, the content according to the present embodiment may include a function command for causing the controlled apparatus 40 to execute a predetermined function. That is, the user can easily cause the controlled apparatus 40 to execute an arbitrary function by switching and selecting the function commands, which are sequentially presented.

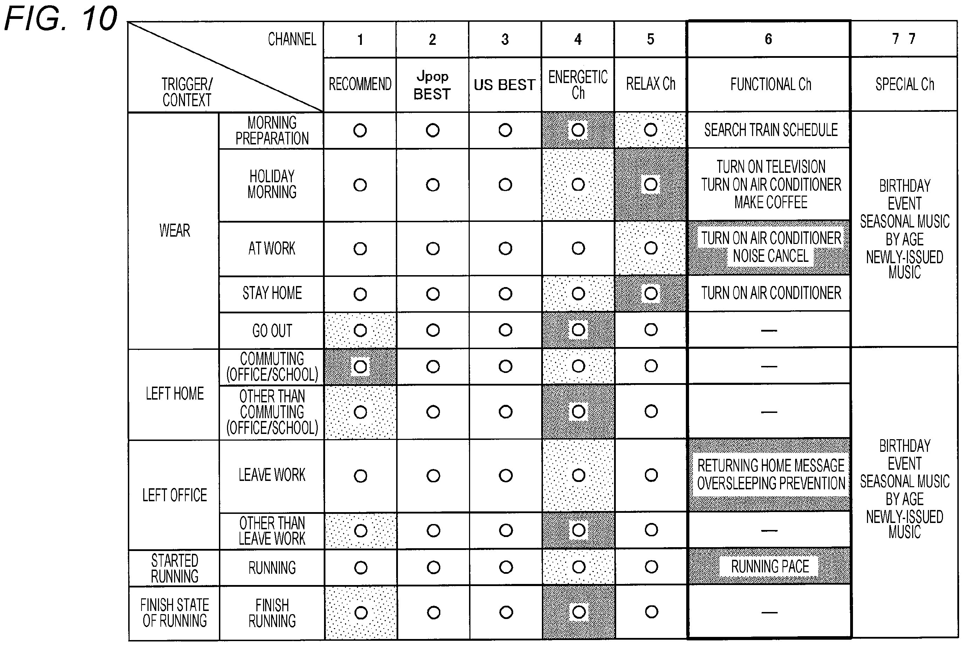

Fig. 10 is a diagram showing an example of the content lists according to the function commands according to the present embodiment. As compared with the example shown in Fig. 8, in the example shown in Fig. 10, it can be seen that the content list "action support channel" is changed to a "functional channel".

For example, in the case of the trigger "wear" and the context "holiday morning", the output control unit 220 can cause function commands "turn on television", "turn on air conditioner", "make coffee", and the like to be presented in order of priority, and can cause the controlled apparatus 40 to execute the function according to the function command selected by the user.

Moreover, for example, in the case of the trigger "wear" and the context "at work", the output control unit 220 may cause the function commands "turn on air conditioner", "noise cancel", and the like, to be presented in order of priority, and may cause the controlled apparatus 40 to execute the function according to the function command selected by the user.

Note that the list generation unit 230 according to the present embodiment can generate the content list including the audio programs and the function commands as described above, and set the priority, for example, on the basis of the action history of the user. Here, the above-described action history includes, for example, the operation history of the user to the content lists and the like, and the execution history of the functions of the controlled apparatus 40.

For example, the list generation unit 230 may cause the history holding unit 240 to record the utterance, the equipment operation, or the like, performed to the information processing terminal 10 by the user in association with the context, and in a case where a number of times of selection of the same audio program or the like exceeds a threshold value, the list generation unit 230 may register the content list or the content. For example, in a case where a number of times of reproduction of a "relaxable audio program" in the context "morning preparation" by the user exceeds a threshold value, the list generation unit 230 can generate and assign a content list related to the "relaxing audio program".

Moreover, for example, the list generation unit 230 may cause the history holding unit 240 to record the execution of a predetermined function of the controlled apparatus 40 by the user in association with the context, and in a case where a number of times of execution of the same function exceeds a threshold value, the list generation unit 230 may assign the content list including the function command corresponding to the relevant function. For example, in a case where a number of times of "turn on television" in the context "holiday morning" by the user exceeds a threshold value, the list generation unit 230 can generate and assign the content list including the function command for "turn on the television".

With the above-described function that the list generation unit 230 according to the present embodiment has, the content lists having a high possibility that the user selects the relevant content lists in a predetermined context can be presented in order of priority, and a high-quality content provision corresponding to the state and the preference of the user, which changes every day, can be realized.

Note that the assignment of the content list may be executed through an inquiry to the user and a response from the user. For example, the list generation unit 230 can cause the information processing terminal 10 to output a voice such as "Do you want to assign XXX to the channel?" or the like, and execute the assignment of the content list in a case where the user gives a positive response.

Moreover, a function that is always executed by the user in a predetermined context, or the like may be controlled to be automatically executed when the corresponding context is recognized without performing the assignment to the content list.

Moreover, the list generation unit 230 may generate a new content list separately from the existing content lists along with detailing of the context. For example, a case is assumed where the function commands "make coffee", "turn on television", and "stop music" corresponding to a context "holiday afternoon" have already existed. At this time, from the accumulation of the action history of the user, in a case where it is recognized that "stop music" is selected in the case of "stay in an area C on holiday afternoon", which is further detailed from the above-mentioned context, the list generation unit 230 can separate the function command "stop music" from the context "holiday afternoon", and generate it as a content list associated with the new context "stay in an area C on holiday afternoon". Note that the recognition unit 210 can recognize the context related to the place as described above, for example, on the basis of the information such as the GNSS signal received by the information processing terminal 10, a Wi-Fi access point to be connected, and the like.

With the above-described function that the list generation unit 230 according to the present embodiment has, by further detailing the context that associates the audio program, the function command, or the like selected by the user, high-accurate content provision according to detailed conditions can be realized.

Moreover, the list generation unit 230 according to the present embodiment may generate the content list or change the priority on the basis of feedback of the user. For example, in a case where the user frequently selects the content set to the priority 2 than the content set to the priority 1, the list generation unit 230 may change the order of the two or the like. In this manner, the feedback of the user according to the present embodiment includes a selection action of the user with respect to the presented content.

Moreover, on the other hand, the list generation unit 230 may execute processing for lowering the priority or deletion processing with respect to the content that is not selected by the user at all or the content having a low selection frequency. In this manner, the feedback of the user according to the present embodiment can include implicit feedback such as no response to the content or the like. With the above-described function that the list generation unit 230 has, the selection of the user is effectively prevented from being complicated because of increase of the content lists in number, so that high-quality content provision matching the preference of the user can be always realized. Note that the deletion of the content or the content list may be executed through an inquiry and a response by the user.

As described above, the information processing server 20 according to the present embodiment can control the provision of the plurality of content lists corresponding to each of the various contexts, and performs the switching or the selection of the content lists on the basis of the equipment operation, the gesture of the user or the like. With the above-described functions that the information processing server 20 according to the present embodiment has, the high-quality content provision according to the situation or the preference of the user or the like can be realized, and the user can select the content with a more intuitive and simpler operation.

Note that while it is described that the content according to the present embodiment includes the audio program and the function command, the content may be controlled as a hierarchical structure in a dimension different from each of the audio program and the function command. For example, the output control unit 220 may control the switching and the selection of the content lists related to the audio program in a case where an inclination of a face of the user is nearly horizontal, and shaking a head or nodding is recognized. On the other hand, in a case where the face of the user is inclined from a horizontal direction by a threshold value or more, for example, in a case where the user shakes his or her face or nods while facing downward, the output control unit 220 may control the switching or the selection of the content lists related to the function command. In this manner, the information processing server 20 according to the present embodiment can also recognize the gesture and the equipment operation of the user in units of a plurality of dimensions, and control the presentation of the content list corresponding to the relevant dimensions. With the above-described function that the information processing server 20 according to the present embodiment has, the selection of more content can be realized with fewer operation instructions without using visual information.

### <<1.7. Flow of control>>

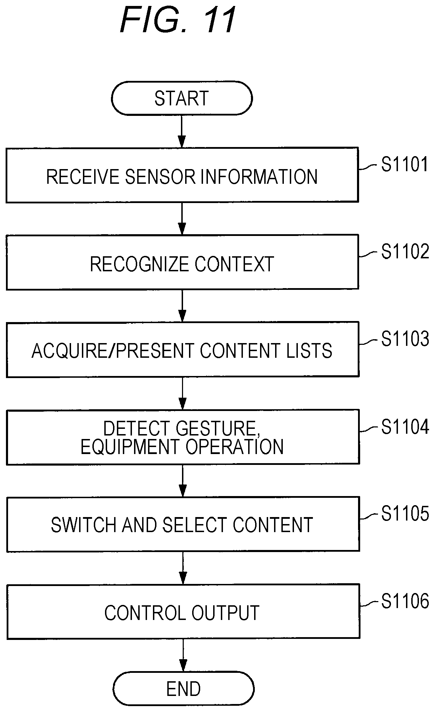

Next, a flow of the control by the information processing server 20 according to the present embodiment will be described. Fig. 11 is a flowchart showing the flow of the control by the information processing server 20 according to the present embodiment.

Referring to Fig. 11, first, the communication unit 250 receives the sensor information from the information processing terminal 10 or the sensor apparatus 30 (S1101).

Next, the recognition unit 210 performs the recognition of the context on the basis of the sensor information received in step S1101 (S1102).

Next, on the basis of the context recognized in step S1102, the output control unit 220 acquires and presents the plurality of content lists corresponding to the relevant context (S1103).

Next, the recognition unit 210 recognizes the equipment operation or the gesture of the user with respect to the presented content lists (S1104).

Next, the output control unit 220 controls the switching and the selection of the content lists on the basis of the equipment operation and the gesture recognized in step S1104 (S1105).

Subsequently, the output control unit 220 executes output control based on the context selected in step S1105 (S1106).

### <2. Hardware configuration example>

Next, a hardware configuration example common between the information processing terminal 10 and the information processing server 20 according to one embodiment of the present disclosure will be described. Fig. 15 is a block diagram showing the hardware configuration example of the information processing terminal 10 and the information processing server 20 according to the one embodiment of the present disclosure. Referring to Fig. 15, the information processing terminal 10 and the information processing server 20 each have, for example, a processor 871, a ROM 872, a RAM 873, a host bus 874, a bridge 875, an external bus 876, an interface 877, and an input apparatus 878, an output apparatus 879, a storage 880, a drive 881, a connection port 882, and a communication apparatus 883. Note that the hardware configuration shown here is an example, and some of the components may be omitted. Moreover, components other than the components shown here may be further included.

### (Processor 871)

The processor 871, for example, functions as an arithmetic operation processing apparatus or a control apparatus, and controls an entire operation of each of the components or a part thereof on the basis of various programs recorded on the ROM 872, the RAM 873, the storage 880, or a removable recording medium 901.

### (ROM872, RAM873)

The ROM 872 is a means for storing programs read by the processor 871, data used for arithmetic operations, and the like. The RAM 873 temporarily or permanently stores, for example, the programs read by the processor 871, various parameters that change as needed when each of the programs is executed, and the like.

### (Host bus 874, bridge 875, external bus 876, interface 877)

The processor 871, the ROM 872, and the RAM 873 are mutually connected, for example, via the host bus 874 capable of high-speed data transmission. On the other hand, the host bus 874 is connected to the external bus 876 having a relatively low data transmission speed, for example, via the bridge 875. Moreover, the external bus 876 is connected to the various components via the interface 877.

### (Input apparatus 878)

For the input apparatus 878, for example, a mouse, a keyboard, a touch panel, a button, a switch, a lever, and the like are used. Further, as the input apparatus 878, a remote controller (hereinafter, remote controller) capable of transmitting a control signal using infrared rays or other radio waves may be used. Moreover, the input apparatus 878 includes an audio input apparatus such as a microphone or the like.

### (Output apparatus 879)

The output apparatus 879 is an apparatus capable of visually or auditorily notifying the user of the acquired information, the apparatus being, for example, a display apparatus such as a cathode ray tube (CRT), an LCD, an organic EL, or the like, an audio output apparatus such as a speaker, a headphone, or the like, a printer, a mobile phone, a facsimile, or the like. Moreover, the output apparatus 879 according to the present disclosure includes various vibration devices capable of outputting a tactile stimulus.

### (Storage 880)

The storage 880 is an apparatus for storing various types of data. As the storage 880, for example, a magnetic storage device such as a hard disk drive (HDD) or the like, a semiconductor storage device, an optical storage device, a magneto-optical storage device, or the like is used.

### (Drive 881)

The drive 881 is, for example, an apparatus that reads information recorded on the removable recording medium 901 such as a magnetic disk, an optical disk, a magneto-optical disk, or a semiconductor memory or the like, or writes information on the removable recording medium 901.

### (Removable recording medium 901)

The removable recording medium 901 is, for example, a DVD medium, a Blu-ray (registered trademark) medium, an HD DVD medium, various semiconductor storage media, or the like. Obviously, the removable recording medium 901 may be, for example, an IC card on which a non-contact type IC chip is mounted, electronic equipment, or the like.

### (Connection port 882)

The connection port 882 is, for example, a port configured to connect externally connected equipment 902 such as a universal serial bus (USB) port, an IEEE1394 port, a small computer system interface (SCSI), an RS-232C port, an optical audio terminal, or the like.

### (Externally connected equipment 902)

The externally connected equipment 902 is, for example, a printer, a portable music player, a digital camera, a digital video camera, an IC recorder, or the like.

### (Communication apparatus 883)

The communication apparatus 883 is a communication device configured to connect to a network, and is, for example, a wired or wireless LAN, Bluetooth (registered trademark), or a communication card for a wireless USB (WUSB), a router for optical communication, a router for an asymmetric digital subscriber line (ADSL), various modems for communication, or the like.

### <3. Conclusion>

As described above, the information processing server 20 according to the one embodiment of the present disclosure includes the output control unit 220 that controls the provision of the plurality of content lists corresponding to the relevant context to the user on the basis of the recognized context. Further, the output control unit 220 according to the one embodiment of the present disclosure has the function of controlling the switching and the selection of the content lists on the basis of the equipment operation or the gesture by the user. Such a configuration allows the user to operate the content more intuitively.

Heretofore, the preferred embodiment of the present disclosure has been described above in detail with reference to the accompanying drawings, but the technical scope of the present disclosure is not limited to such examples. It is obvious that a person having ordinary knowledge in the technical field of the present disclosure can come up with various modifications or amendments within the scope of the technical idea described in the claims, and it is understood that these obviously belong to the technical scope of the present disclosure.

Moreover, the effects described in the present specification are merely explanatory or illustrative, and are not limitative. That is, the technology according to the present disclosure can exert other effects that are apparent to those skilled in the art from the description of the present specification in addition to or instead of the above-described effects.

Moreover, the steps related to the processing of the information processing server 20 in this specification do not necessarily have to be processed in time series in the order described in the flowchart. For example, the steps related to the processing of the information processing server 20 may be processed in an order different from the order described in the flowchart, or may be processed in parallel.

Moreover, a program for causing hardware such as a CPU, a ROM, and a RAM built in a computer to exert the functions equivalent to the configurations that the information processing server 20 has can also be created, and a computer-readable, non-transitory recording medium that records the relevant program can also be provided.

Note that the following configurations also belong to the technical scope of the present disclosure.
(1) An information processing apparatus including
   an output control unit that controls provision of a plurality of content lists corresponding to a context to a user on the basis of the recognized context,
   in which the output control unit controls switching of the content lists on the basis of an equipment operation or a gesture by the user.
(2) The information processing apparatus according to the above-described (1),
   in which each of the content lists has a hierarchical structure including a plurality of content groups, and
   the output control unit controls switching or selection of the content lists and the content groups on the basis of an equipment operation or a gesture by the user.
(3) The information processing apparatus according to the above-described (2),
   in which each of the content groups includes a plurality of content, and
   the output control unit controls switching or selection of the content on the basis of an equipment operation or a gesture by the user.
(4) The information processing apparatus according to any of the above-described (1) to (3), in which the output control unit controls decision of the content lists on the basis of a first gesture recognized, and controls the switching of the content lists on the basis of a second gesture.
(5) The information processing apparatus according to any of the above-described (1) to (4), in which the content lists are provided by audio.
(6) The information processing apparatus according to any of the above-described (1) to (5),
   in which the content lists include a list related to audio programs, and
   the output control unit controls selection or reproduction of the audio programs on the basis of an equipment operation or a gesture by the user.
(7) The information processing apparatus according to any of the above-described (1) to (6),
   the content lists include a list related to function commands, and
   the output control unit controls selection or execution of the function commands on the basis of a voice or a gesture of the user.
(8) The information processing apparatus according to any of (1) to (7), in which the output control unit controls provision of the content lists by a wearable apparatus.
(9) The information processing apparatus according to any of the above-described (1) to (8), in which the output control unit controls provision of the content lists by a hearable apparatus.
(10) The information processing apparatus according to any of the above-described (1) to (9), further including a list generation unit that generates the content lists corresponding to the context.
(11) The information processing apparatus according to the above-described (10), in which the list generation unit generates the content lists or changes priority on the basis of an action history of the user.
(12) The information processing apparatus according to the above-described (11), in which the action history of the user includes at least any of an operation history with respect to the content lists, or a function execution history of the apparatus.
(13) The information processing apparatus according to any of the above-described (10) to (12), in which the list generation unit generates a new content list from existing content lists along with detailing of the context.
(14) The information processing apparatus according to any of the above-described (10) to (13), in which the list generation unit generates the content lists, or changes priority on the basis of feedback of the user.
(15) The information processing apparatus according to any of the above-described (1) to (14), further including a recognition unit that recognizes the context.
(16) The information processing apparatus according to any of the above-described (1) to (15), further including a provision unit that provides the content lists to the user on the basis of control by the output control unit.
(17) An information processing method including:
   controlling, by a processor, provision of a plurality of content lists corresponding to a context to a user on the basis of the recognized context,
   in which the controlling further includes controlling switching of the content lists on the basis of an equipment operation or a gesture by the user.
(18) A program configured to cause a computer to function as an information processing apparatus,
   in which the information processing apparatus includes an output control unit that controls provision of a plurality of content lists corresponding to a context to a user on the basis of the recognized context, and
   the output control unit controls switching of the content lists on the basis of an equipment operation or a gesture by the user.

### REFERENCE SIGNS LIST

- 10: Information processing terminal
- 110: Audio output unit
- 120: Input unit
- 130: Sensor unit
- 140: Control unit
- 150: Server communication unit
- 20: Information processing server
- 210: Recognition unit
- 220: Output control unit
- 230: List generation unit
- 240: History holding unit
- 250: Communication unit
- 30: Sensor apparatus
- 40: Controlled apparatus

## Claims

1. An information processing apparatus comprising
an output control unit that controls provision of a plurality of content lists corresponding to a context to a user on a basis of the recognized context,
wherein the output control unit controls switching of the content lists on a basis of an equipment operation or a gesture by the user.

2. The information processing apparatus according to claim 1,
wherein each of the content lists has a hierarchical structure including a plurality of content groups, and
the output control unit controls switching or selection of the content lists and the content groups on a basis of an equipment operation or a gesture by the user.

3. The information processing apparatus according to claim 2,
wherein each of the content groups includes a plurality of content, and
the output control unit controls switching or selection of the content on a basis of an equipment operation or a gesture by the user.

4. The information processing apparatus according to claim 1, wherein the output control unit controls decision of the content lists on a basis of a first gesture recognized, and controls the switching of the content lists on a basis of a second gesture.

5. The information processing apparatus according to claim 1, wherein the content lists are provided by audio.

6. The information processing apparatus according to claim 1,
wherein the content lists include a list related to audio programs, and
the output control unit controls selection or reproduction of the audio programs on a basis of an equipment operation or a gesture by the user.

7. The information processing apparatus according to claim 1,
wherein the content lists include a list related to function commands, and
the output control unit controls selection or execution of the function commands on a basis of a voice or a gesture of the user.

8. The information processing apparatus according to claim 1, wherein the output control unit controls provision of the content lists by a wearable apparatus.

9. The information processing apparatus according to claim 1, wherein the output control unit controls provision of the content lists by a hearable apparatus.

10. The information processing apparatus according to claim 1, further comprising a list generation unit that generates the content lists corresponding to the context.

11. The information processing apparatus according to claim 10, wherein the list generation unit generates the content lists or changes priority on a basis of an action history of the user.

12. The information processing apparatus according to claim 11, wherein the action history of the user includes at least any of an operation history with respect to the content lists, or a function execution history of the apparatus.

13. The information processing apparatus according to claim 10, wherein the list generation unit generates a new content list from existing content lists along with detailing of the context.

14. The information processing apparatus according to claim 10, wherein the list generation unit generates the content lists, or changes priority on a basis of feedback of the user.

15. The information processing apparatus according to claim 1, further comprising a recognition unit that recognizes the context.

16. The information processing apparatus according to claim 1, further comprising a provision unit that provides the content lists to the user on a basis of control by the output control unit.

17. An information processing method comprising:
controlling, by a processor, provision of a plurality of content lists corresponding to a context to a user on a basis of the recognized context,
wherein the controlling further includes controlling switching of the content lists on a basis of an equipment operation or a gesture by the user.

18. A program configured to cause a computer to function as an information processing apparatus,
wherein the information processing apparatus includes an output control unit that controls provision of a plurality of content lists corresponding to a context to a user on a basis of the recognized context, and
the output control unit controls switching of the content lists on a basis of an equipment operation or a gesture by the user.
